**Europäisches Patentamt**

**European Patent Office**

**Office européen des brevets**

(19)

(11) Publication number: **0 189 610**

**A1**

(12) **EUROPEAN PATENT APPLICATION**

(21) Application number: **85202024.7**

(22) Date of filing: **05.12.85**

(51) Int. Cl.⁴: **B 01 D 3/12**
**C 10 G 7/06**

(30) Priority: **19.12.84 NL 8403847**

(43) Date of publication of application:
**06.08.86 Bulletin 86/32**

(84) Designated Contracting States:
**BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **van Kleef, Alfred Louis**
**Carel van Bylandtlaan 30**
**NL-2596 HR The Hague(NL)**

(74) Representative: **Aalbers, Onno et al,**
**P.O. Box 302**
**NL-2501 CH The Hague(NL)**

(54) **Process and apparatus for the short-path vacuum distillation of a liquid hydrocarbon mixture.**

(57) Short-path vacuum distillation of a liquid hydrocarbon mixture wherein the liquid trickles, preheated, in an evacuated vessel through a vertical packed vaporization bed (17) with an open configuration in the vicinity of a parallel vertical cooled condensation wall (6), in which process at least a portion of the liquid vaporizes from the vaporization bed and, as distillate, condenses on the condensation wall and is removed.

FIG.1

EP 0 189 610 A1

0189610
K 9417

## PROCESS AND APPARATUS FOR THE SHORT-PATH VACUUM
## DISTILLATION OF A LIQUID HYDROCARBON MIXTURE

The invention relates to the short-path vacuum distillation of liquid hydrocarbon mixtures.

One example of an alternative to distillation in columns with distillation trays is falling film evaporation, wherein the liquid to be vaporized (or to be concentrated by evaporation) flows in a film down a vertical wall which is heated, and wherein the vapour released is removed in a counter-current. Another example is short-path distillation, wherein a film of preheated liquid that is to be distilled flows along a vaporization surface extending parallel to and at a short distance from a condensation surface upon which the vaporized fluid condenses and is removed as a film of distillate. The vaporization surface can optionally be heated and the condensation surface be cooled. Short-path distillation is usually performed under high vacuum, in which case vaporization is possible at a relatively low temperature without the occurrence of boiling phenomena.

The invention relates in particular to the short-path vacuum distillation of hydrocarbon mixtures such as residual oil fractions. A problem with conventional vacuum distillation of oil residue in distillation columns with distillation trays is that, in practice, distillation is difficult to accomplish at a pressure of less than 2000 Pascal and that - in view of the growing interest in the increased recovery of distillate from the residue of atmospheric crude oil distillation by vacuum distillation - the limit for such distillation columns at the present state of the art has been reached:

- if the pressure is further reduced, the column diameter becomes unmanageably great and the steam ejectors for maintaining the vacuum become unacceptably expensive;

- if the temperature of the feed for the column is further increased, inadmissible coking of the residue takes place therein.

An advantage of short-path vacuum distillation is that it can be effected in a simple manner in a relatively small vessel, so that a high vacuum can be economically maintained. It could therefore be an attractive method for the further advanced (deeper) distillation of oil residue fractions. A problem of existing short-path distillation technology, however, is that no reliable and simple apparatuses are available for the distillation of large quantities with the desired selectivity (i.e. separation between residue and distillate). The present invention is intended to present such technology.

For that purpose, according to the invention, short-path vacuum distillation is effected by trickling the liquid, preheated, in an evacuated vessel through a vertical packed vaporization bed with open configuration in the vicinity of a parallel vertical cooled condensation wall, in which process at least a portion of the liquid vaporizes from the vaporization bed and, as distillate, condenses on the condensation wall and is removed.

A packed bed with open configuration is here understood to mean a bed filled with packing whereof the packing elements mutually enclose channels and passages that are openly interconnected with the outer surfaces of the bed.

The liquid has a relatively long residence time in the packed bed as compared with that in a falling film evaporator and there is a relatively large vaporization surface area available so that a relatively large proportion of the liquid vaporizes. Moreover, the bed forms a guide and physical limitation for the liquid, so that said liquid is not dispersed through the rest of the space in the vessel to end up on the condensation wall (which would have an adverse effect on the depth of separation between residue and distillate).

The condensation wall can assume many forms and may, for example, consist of a metal wall that is cooled either indirectly by heat exchange or directly by a cooling liquid flowing down the wall. The condensation wall can also consist of a thin film of cooling liquid. The condensed distillate then flows down along the wall or mixed with the cooling liquid and can be removed.

Preferably, however, the condensation wall consists of a packed condensation bed with open configuration through which the cooling liquid trickles down. An advantage is the large condensation surface area available in the bed, which at the same time forms a guide for the cooling liquid.

A practical embodiment of the invention is that in which the cooling liquid consists of a portion of the removed distillate which, after further cooling, is recirculated to the condensation wall and in which a portion of the distillation residue, after removal, is reheated and recirculated to the vaporization bed. The distillate obtained is thus used as cooling liquid and the residual fraction is also partly recirculated so that while the process is being effected a state of equilibrium is created and two products (distillate and residue) are obtained as partial streams from the two liquid streams being removed, which have constant composition because transient differences are equalized by recirculation.

Preferably, a number of alternating vaporization beds and condensation walls are used. The vaporization beds can allow vapour to pass through on either side and the condensation beds can be operated so that vapour can condense on either side. It is furthermore an advantage of this embodiment that series or parallel connection is then possible, in which case the liquid to be distilled can be routed a number of times through the vessel with a different fraction thereof being removed by vaporization each time (series connection) or that the liquid to be distilled can be distributed in partial streams over the vessel, whereby an increase of capacity can be achieved and/or shorter bed lengths can be used (parallel connection). In both cases, use is made of one vacuum only.

Steam can also be passed through the packed bed or each packed bed in a direction perpendicular to the bed. The effect hereof is twofold: on the one hand the partial tension of the steam produces a stripping effect and on the other hand the steam conducts the vapour from the packed bed to the condensation wall. If a number of alternating packed vaporization and condensation beds are used, the steam can be conducted through all beds successively so that less steam is required.

The invention is pre-eminently suitable for the short-path distillation of a residual oil fraction at a pressure of 10-100 Pascal and a temperature of 330-380 °C. Examples of such fractions are the residue of atmospheric crude oil distillation and the residue of vacuum distillation of the residue of atmospheric crude oil distillation. The distillate obtained from the short-path distillation of such residues is pre-eminently suitable as feed for a thermal or catalytic cracker.

The packed beds according to the invention can, for example, consist of a vertical layer of inert balls, rings, wire of other filling elements, which layer is supported on either side by a vapour-permeable enclosure. Many types of packing elements for the increase of the internal surface area in a space are available in the oil and petrochemicals industry.

The packed beds according to another embodiment of the invention can consist of a number of perforated profiled plates, whereof the profiles do not all extend in the same direction and do not extend in vertical direction. Such packing materials, which are already used in distillation columns, are available in various forms and have high mechanical strength, a high internal surface area and high gas permeability.

The invention also relates to an apparatus for short-path vacuum distillation comprising a vacuum vessel with means for reducing vapour pressure, in which vessel a vertically positioned packed vaporization bed with open configuration is located in the vicinity of a parallel vertical condensation wall and which vessel is provided with means for the supply of preheated liquid to the top of the vaporization bed, with means for the removal of liquid residue at the bottom of the vaporization bed, with means for the cooling or maintaining of the condensation wall and with means for the removal of condensed distillate at the bottom of the condensation wall. Said apparatus is suitable for effecting short-path vacuum distillation in accordance with the invention.

The invention relates further to apparatuses for effecting short-path distillation in accordance with the above-described preferred embodiments of the process according to the invention.

For further clarification, the invention is illustrated with reference to three examples depicted in the appended drawings.

Fig. 1 is a schematic axial cross-section of a vessel for short-path vacuum distillation according to a first typical embodiment of the invention;

Fig. 2 is a transversal cross-section along plane II-II of Fig. 1;

Fig. 3 is a schematic axial cross-section of a vessel according to a second typical embodiment of the invention; and

Fig. 4 is a schematic axial cross-section of a vessel according to a third typical embodiment of the invention.

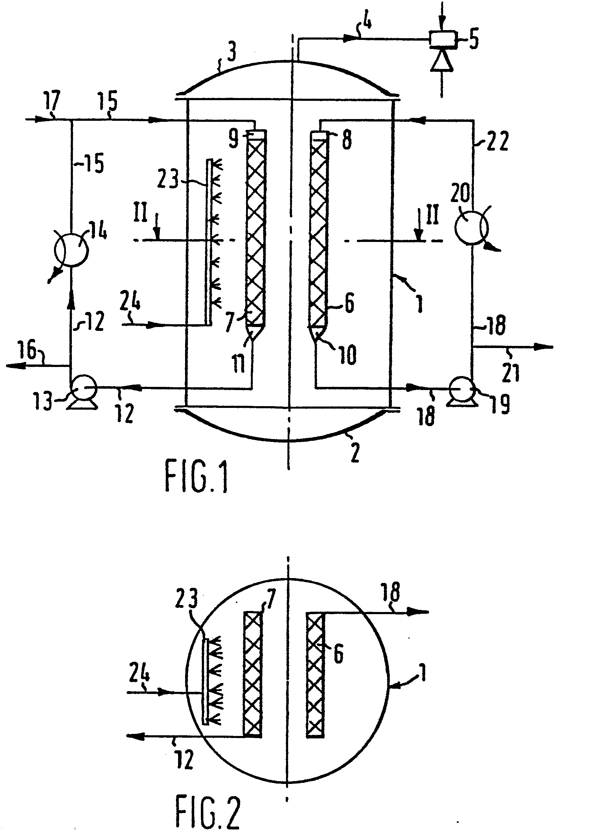

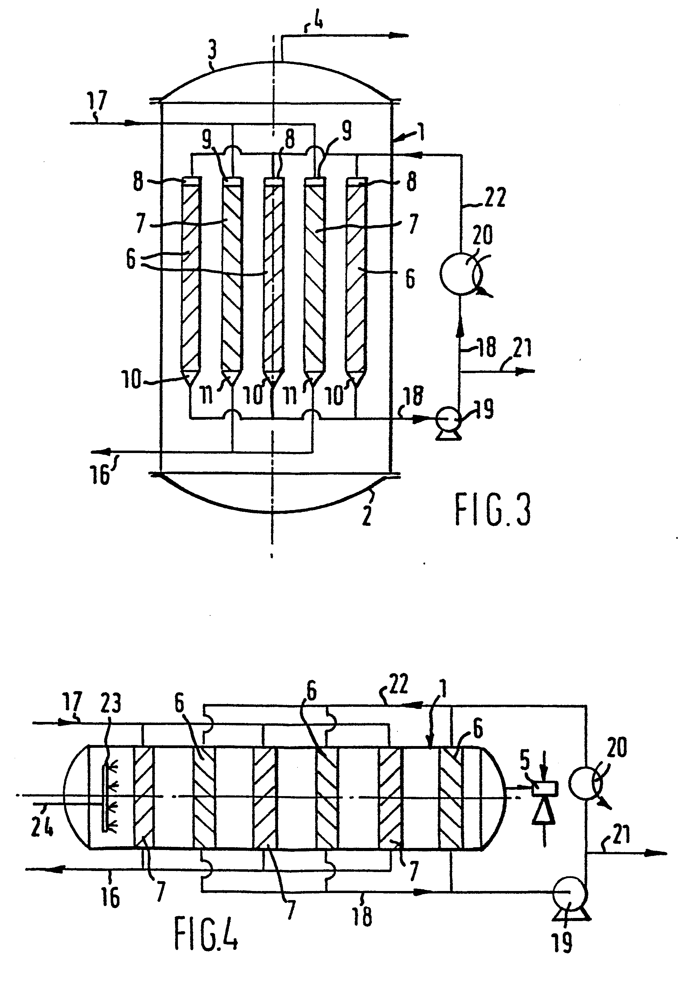

In figs. 1 and 2 a vessel 1 is depicted in the form of a cylindrical vessel with bottom closure 2 and top closure 3 to which a steam ejector 5 is connected via a line 4 to maintain a low pressure in the vessel. Furthermore, two vertical beds 6 and 7, filled with packing material, are located in the vessel 1. The beds extend over a large proportion of the vessel height and diameter and run parallel to one another a short distance apart. At the top of the beds a liquid distributor 8 resp. 9 is arranged over the full bed width and at the bottom of the beds a liquid removal organ 10 resp. 11 is located over the full bed width.

The liquid removal organ 11 of the vaporization bed 7 is connected via the line 12, wherein a pump 13 is situated, to a re-heater 14, and the re-heater is connected via a line 15 to the liquid distributor 9 of said vaporization bed 7. In the line 12 there is a residue removal facility 16 and in the line 15 a feed supply 17.

Similarly, the liquid removal organ 10 of the condensation bed 6 is connected via the line 18, wherein a pump 19 is situated, to a distillate cooler 20. Said cooler 20 is connected via the line 22 to the liquid distributor 8 of said condensation bed 6. In the line 18 there is a distillate removal facility 21.

Along the outer side of the vaporization bed 7 there is a two-dimensional panel 23 charged with steam nozzles directed at the bed 7, which panel is connected to the steam line 24. The panel extends over a large proportion of the breadth and height of the bed 7, a short distance away therefrom and parallel thereto.

Operation of the depicted apparatus is as follows:

Via line 17 preheated oil residue is added to already recirculating reheated oil and said oil is distributed by the liquid distributor 9 over the full breadth of the vaporization bed 7 and subsequently trickles down through bed 7. The highest boiling fraction is vaporized therefrom under the influence of high temperature and low pressure and the stripping steam passed through, and the vapour obtained flows, under the influence of the steam originating from panel 23, in a direction perpendicular to the bed 7 to the condensing bed 6 where the hydrocarbon fraction condenses. The non-vaporized fraction of the oil residue trickles further through the vaporization bed 7 and the lighter hydrocarbons continue to vaporize therefrom. The distillation residue finally trickles from the vaporization bed 7 into the removal organ 11 and a portion thereof is removed as product stream (residue) via line 16. The remaining liquid is reheated in heater 14 and recirculated via line 15.

In the meantime, the condensation bed 6 is cooled with the aid of the cooled recirculated distillate trickling through the bed. The relatively light hydrocarbon fraction that has just condensed, together with the recirculated distillate, trickles through the bed 6 and finally from the bed 6 into the removal organ 10, whence, via line 18, a portion is discharged as product stream (distillate) via line 21 and the remaining portion is cooled in cooler 20 and recirculated via line 22.

It will be clear that - apart from a small percentage of hydrocarbons removed with the steam via ejector 5 - the feed of oil residue supplied via line 17 is wholly separated into a relatively high-boiling residue fraction removed via line 16 and a relatively low-boiling distillate fraction removed via line 21.

In fig. 3 a vessel is depicted whereof the parts that functionally correspond to those in fig. 1 are identified by the same reference numbers. The vessel 1 comprises a set of two vaporization beds 7 connected in parallel, where the preheated liquid, supplied via line 17, trickles through once only, whereafter the distillation residue is removed via line 16. The vaporization beds 7 are situated inbetween three condensing beds 6 wherein, together with distillate that has just condensed, recirculated cooled distillate trickles down to further cool the beds 6. A portion of the distllate is in turn removed via the line 21.

In fig. 4 a vessel 1 with evacuation device 5 is depicted, which boiler comprises a set of three vaporization beds 7 as well as a set of three condensation beds 6. Under the influence of the steam originating from the panel 23, which steam flows in axial direction through the horizontal vessel 1, the vaporized fraction is in each case passed to the next upstream bed 6 where it condenses. The liquid to be distilled is preheated, passed via the line 17 to the vaporization beds 7 connected in parallel and trickles down through said beds. The distillation residue is removed via the line 16 and not recirculated. The distillate fraction is, as in the example according to fig. 3, partly cooled and recirculated and partly removed via line 21.

0189610

K 9417

## C L A I M S

1.   Short-path vacuum distillation of a liquid hydrocarbon mixture wherein the liquid trickles, preheated, in an evacuated vessel through a vertical packed vaporization bed with an open configuration in the vicinity of a parallel vertical cooled condensation wall, in which process at least a portion of the liquid vaporizes from the vaporization bed and, as distillate, condenses on the condensation wall and is removed.

2.   Process as claimed in claim 1, wherein the condensation wall is cooled or formed by a downward flowing cooling liquid.

3.   Process as claimed in claim 2, wherein the condensation wall consists of a packed condensation bed with open configuration through which the cooling liquid trickles down.

4.   Process as claimed in claims 2 or 3, wherein the cooling liquid consists partly of the removed distillate which, after further cooling, is recirculated to the condensation wall and wherein a portion of the distillation residue is, after removal, reheated and recirculated to the vaporization bed.

5.   Process as claimed in one or more of claims 1-4, wherein a number of alternating vaporization beds and condensation walls are used.

6.   Process as claimed in one or more of claims 1-5, wherein steam is conducted through the vaporization bed or each vaporization bed in a direction perpendicular to the bed.

7.   Process as claimed in one or more of claims 1-6, wherein a residual oil fraction is distilled at a pressure of 10-100 Pascal and a temperature of 330-380 °C.

8.   Process as claimed in one or more of claims 1-7, wherein the packed bed or each packed bed consists of a vertical layer of inert balls, rings, wire or other filling elements, which layer is supported on either side by a vapour-permeable enclosure.

9. Process as claimed in one or more of claims 1-7, wherein the packed or each packed bed consists of a number of perforated profiled plates, whose profiles do not all extend in the same direction and do not extend in vertical direction.

10. Apparatus for short-path vacuum distillation comprising a vacuum vessel with means for reducing vapour pressure, in which vessel a vertically positioned packed vaporization bed with open configuration is located in the vicinity of a parallel vertical condensation wall and which vessel is provided with means for the supply of preheated feed to the top of the vaporization bed, with means for the removal of liquid residue at the bottom of the vaporization bed, with means for the cooling or maintaining of the condensation wall and with means for the removal of condensed distillate at the bottom of the condensation wall.

11. Apparatus as claimed in claim 10, wherein the condensation wall consists of a packed condensation bed with open configuration.

12. Apparatus as claimed in claim 11, which comprises means for the cooling and recirculation of a portion of the removed distillate and means for the reheating and recirculation of a portion of the distillation residue.

13. Apparatus as claimed in one or more of claims 10-12, characterized by a number of alternating vaporization beds and condensation walls.

14. Apparatus as claimed in one or more of claims 10-13, characterized by means for guiding steam through the vaporization bed or each vaporization bed in a direction perpendicular to the bed.

15. Apparatus as claimed in one or more of claims 10-14, wherein the packed bed or each packed bed consists of a vertical layer of inert balls, rings, wire or other filling elements, which layer is supported on either side by a vapour-permeable enclosure.

16. Apparatus as claimed in one or more of claims 10-14, wherein the packed bed or each packed bed consists of a number of perforated profiled plates, whose profiles do not all extend in the same direction and do not extend in vertical direction.

CTRH04

FIG.1

FIG.2

FIG.3

FIG.4

**0189610**

European Patent
Office

**EUROPEAN SEARCH REPORT**

Application number

EP 85 20 2024

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | CH-A- 378 853 (E.L.HOLLAND-MERTEN) * Page 2, lines 1-21; figure * | 1,2 | B 01 D 3/12 C 10 G 7/06 |
| A | US-A-2 310 399 (H.L. COX et al.) * Figure 1 * | 1 | |
| A | FR-A- 773 068 (I.C.I.) * Figure * | 1 | |
| A | BE-A- 744 458 (C.F. LABRIQUE) * Figure 1 * | 1 | |

| | | | TECHNICAL FIELDS SEARCHED (Int. Cl.4) |
|---|---|---|---|
| | | | B 01 D C 10 G |

The present search report has been drawn up for all claims

| Place of search | Date of completion of the search | Examiner |
|---|---|---|
| THE HAGUE | 07-04-1986 | VAN BELLEGHEM W.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82